# DEMANDE DE BREVET EUROPEEN

(11) **EP 4 309 948 A1**
(43) Date de publication de la demande: **24.01.2024**
(21) Numéro de dépôt: 22315157.2
(22) Date de dépôt: 18.07.2022
(51) Int. Cl.: B60L 53/65

(54) **PROCÉDÉ ET DISPOSITIF D'IDENTIFICATION D'UN TYPE DE VÉHICULE ÉLECTRIQUE PAR UNE BORNE DE RECHARGE**

(71) Demandeur: Flexifai, 77600 Bussy-Saint-Georges (FR)
(72) Inventeur: Mokh, Ali, 91940 Les Ulis (FR); Yigan, Edem, 77600 Bussy-Saint-Georges (FR)
(74) Mandataire: Dupuis-Latour, Dominique

(57) **Abrégé**

Le dispositif (110) comprend : une interface (116) de couplage à une ligne de recharge (102) couplant un bloc d'alimentation de puissance (106) à une batterie d'un véhicule en configuration de recharge, et des moyens réflectométriques (112-118) aptes à : injecter des signaux de mesure dans la ligne de recharge ; capter des signaux réfléchis produits en retour dans la ligne de recharge ; et analyser le profil temporel et/ou fréquentiel des signaux réfléchis pour obtenir des descripteurs électriques propres à la ligné de recharge. Le dispositif comprend également des moyens de caractérisation (120) aptes à produire une empreinte électrique représentative du véhicule (200) à partir des descripteurs électriques obtenus, et des moyens d'identification (120), aptes à déterminer un type correspondant au véhicule (200) sur la base de l'empreinte électrique produite et d'une pluralité d'empreintes prédéterminées de types de véhicules électriques connus.

## Description

L'invention concerne la recharge des batteries de véhicules électriques au moyen de bornes externes alimentées par un réseau de distribution d'énergie électrique.

### Domaine technique de l'invention

Ces bornes, installées en bordure de trottoir, sur des parkings publics ou collectifs, des aires d'autoroute, etc. sont à la disposition des automobilistes souhaitant recharger la batterie de leur véhicule.

De fait, de nombreux types différents de véhicules peuvent être branchés sur une même borne, et des normes ont été édictées pour unifier la connectique de couplage de la borne aux véhicules et pour assurer la délivrance d'une énergie électrique avec des niveaux de tension et de courant compatibles avec le système électrique du véhicule venant se connecter à la borne.

Après vérification d'une connexion correcte signalée sur un fil de confirmation de connexion dit *Plug Pilot* (PP), le processus de recharge est géré et contrôlé par échange de signaux entre la borne et le véhicule via une communication numérique bas niveau sur un fil dit *Control Pilot* (CP) : la borne indique le courant maximal qu'elle peut fournir, et le véhicule indique alors qu'il est prêt à recevoir la tension de recharge en précisant ses exigences sur le courant à fournir, lui-même fonction de l'état de charge de la batterie, de sa température, etc.

Cette communication borne/véhicule est une communication de nature purement électrique, opérée entre, d'une part, le bloc d'alimentation de puissance de la borne et, d'autre part, les circuits situés directement en aval de l'interconnexion avec la prise de recharge du véhicule, tout particulièrement le convertisseur AC/DC permettant de transformer le courant alternatif triphasé délivré par la borne en un courant continu de recharge de la batterie.

### État de la technique antérieure

Avec la multiplication des véhicules électriques chez de nombreux constructeurs et les évolutions de ces véhicules au fur et à mesure des versions ou modèles successifs, il serait utile de pouvoir déterminer préalablement, de façon automatique, le type exact du véhicule au moment de sa connexion à la borne, et ceci sans que le véhicule n'ait à communiquer à la borne une information numérique identifiant ce type, cette fonctionnalité n'étant aujourd'hui pas prévue par les normes de communication entre véhicule et borne.

Par "type de véhicule" on entendra non seulement la marque et le modèle du véhicule électrique, mais également, pour un même modèle, la version de ce modèle au cas où celle-ci présenterait des caractéristiques électriques de batterie et/ou de mode de recharge significativement différentes de celles des autres versions.

Par ailleurs, par "véhicule" on entendra non seulement les véhicules automobiles proprement dits, comme dans la description détaillée ci-après donnée à titre d'exemple non limitatif, mais également tout véhicule à propulsion totalement ou partiellement électrique muni d'une batterie susceptible d'être rechargée par une borne extérieure. Ce terme inclut notamment les motos et scooters, qui sont des véhicules auxquels peuvent s'appliquer directement les enseignements de l'invention, de même que les aéronefs ou drones à propulsion électrique.

Le but de l'invention est de proposer une technique permettant, dès le branchement du véhicule électrique à la borne, et quel que soit ce véhicule, d'en déterminer immédiatement le type, de façon indépendante des signaux numériques échangés sur le fil pilote CP selon les protocoles connus existant à ce jour.

### Exposé de l'invention

À cet effet, le dispositif de l'invention comprend :
- une interface de couplage du dispositif à une ligne de recharge de véhicule électrique, la ligne de recharge couplant un bloc d'alimentation secteur de puissance à une batterie d'un véhicule en configuration de recharge ;
- des moyens réflectométriques, aptes à : injecter des signaux de mesure dans la ligne de recharge via l'interface de couplage, capter via l'interface de couplage des signaux réfléchis produits en retour dans la ligne de recharge, et analyser le profil temporel et/ou fréquentiel des signaux réfléchis pour obtenir des descripteurs électriques propres à la ligne de recharge ;
- des moyens de caractérisation, aptes à produire une empreinte électrique représentative du véhicule à partir des descripteurs électriques obtenus ; et
- des moyens d'identification, aptes à déterminer un type correspondant au véhicule en configuration de recharge, sur la base de l'empreinte électrique produite par les moyens de caractérisation et d'une pluralité d'empreintes prédéterminées de types de véhicules électriques connus.

Selon diverses caractéristiques subsidiaires avantageuses :
- les moyens d'identification comprennent des moyens corrélateurs, aptes à corréler l'empreinte électrique produite par les moyens de caractérisation avec des empreintes prédéterminées de types de véhicules électriques connus mémorisées dans une base de données ;
- le dispositif comprend en outre des moyens pour transmettre à la base de données, pour enregistrement dans la base de données, des informations produites en sortie des moyens réflectométriques et/ou des moyens d'identification ;
- le dispositif comprend en outre des moyens de confirmation, aptes à : présenter à un utilisateur le type de véhicule électrique déterminé par les moyens d'identification, recevoir en entrée une information de confirmation ou d'infirmation, et transmettre cette information de confirmation ou d'infirmation à la base de données pour enregistrement dans la base de données ;
- la base de données d'empreintes prédéterminées de types de véhicules électriques connus est une base de données incluse dans le dispositif d'identification, ou bien une base de données distante, externe au dispositif d'identification, le dispositif d'identification comprenant alors des moyens de communication aptes à permettre un accès à la base de données distante ; et/ou
- les moyens d'identification comprennent un réseau neuronal recevant en entrée l'empreinte électrique produite par les moyens de caractérisation, le réseau neuronal ayant été préalablement entraîné avec des empreintes prédéterminées de types de véhicules électriques connus.

L'invention couvre également une borne de recharge de véhicule électrique, extérieure au véhicule, incorporant un dispositif d'identification tel que ci-dessus.

Elle couvre aussi une station de recharge comprenant une pluralité de bornes de recharge individuelles dont chacune est apte à être couplée à un véhicule électrique respectif, et comprenant: un dispositif d'identification tel que ci-dessus, commun à l'ensemble des bornes de recharge, et des moyens contrôlés de couplage temporaire du dispositif d'identification à chacune des bornes de recharge.

L'invention a également pour objet un procédé d'identification mis en œuvre au moyen d'un tel dispositif, comprenant les étapes suivantes :
a) couplage à une ligne de recharge de véhicule électrique, la ligne de recharge couplant un bloc d'alimentation secteur de puissance à une batterie d'un véhicule électrique en configuration de recharge ;
b) injection de signaux de mesure dans la ligne de recharge ;
c) recueil de signaux réfléchis produits en retour dans la ligne de recharge ;
d) analyse du profil temporel et/ou fréquentiel des signaux réfléchis pour obtenir des descripteurs électriques propres à la ligne de recharge ;
e) caractérisation d'une empreinte électrique représentative du véhicule à partir des descripteurs électriques obtenus ; et
f) détermination, sur la base de l'empreinte électrique produite à l'étape de caractérisation et d'une pluralité d'empreintes prédéterminées de types de véhicules électriques connus, d'un type correspondant au véhicule en configuration de recharge.

Selon divers modes de mise en œuvre subsidiaires avantageux de ce procédé :
- l'étape f) comprend la corrélation de l'empreinte électrique produite à l'étape de caractérisation avec des empreintes prédéterminées de types de véhicules électriques connus mémorisées dans une base de données ;
- l'étape f) comprend l'application de de l'empreinte électrique produite à l'étape de caractérisation à un réseau neuronal préalablement entrainé avec des empreintes prédéterminées de types de véhicules électriques connus ;
- l'exécution des étapes b) à f) est conditionnée à la réception préalable d'un signal de confirmation i) du couplage effectif du véhicule électrique à la ligne de recharge et ii) du passage d'un courant de recharge du bloc d'alimentation secteur de puissance à la batterie du véhicule ; et/ou
- le procédé comprend en outre, après l'étape f) de détermination du type correspondant au véhicule en configuration de recharge, une étape g) de diagnostic d'état du système électrique du véhicule, le diagnostic d'état étant au moins en partie fonction du type de véhicule déterminé à l'étape f).

### Brève description des dessins

On va maintenant décrire un exemple de mise en œuvre de l'invention, en référence aux dessins annexés où les mêmes références désignent d'une figure à l'autre des éléments identiques ou fonctionnellement semblables.
La Figure 1 est une représentation schématique d'un véhicule électrique branché à une borne de recharge.
La Figure 2 illustre, sous forme de schéma par blocs, les principaux éléments permettant la mise en œuvre des enseignements de l'invention.
La Figure 3 illustre les étapes successives du processus d'identification du type du véhicule électrique au moyen du dispositif de la Figure 2.

### Description détaillée de modes de réalisation de l'invention

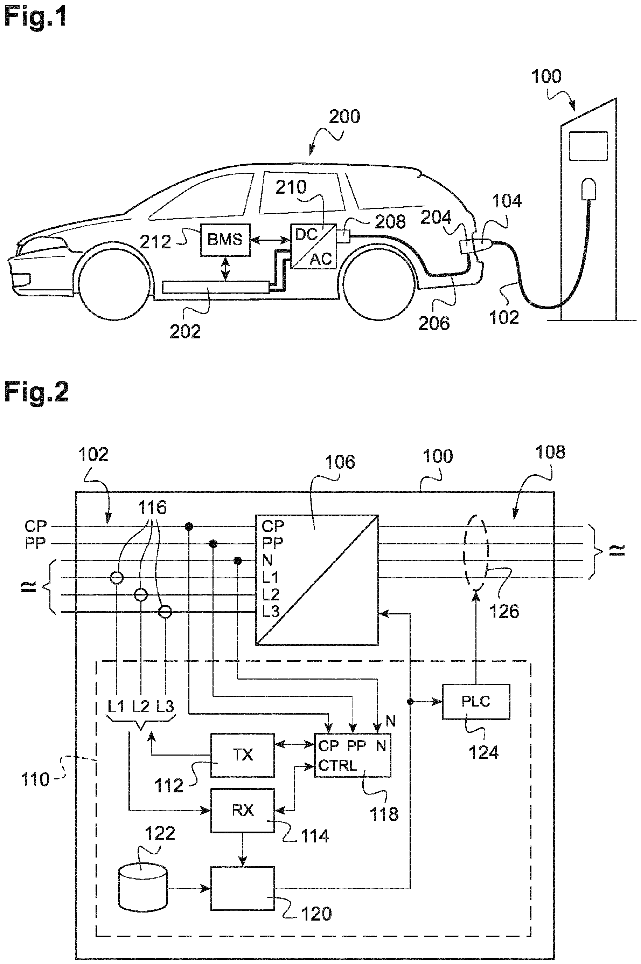

Sur la Figure 1, la référence 100 désigne une borne de recharge à laquelle est branché un véhicule électrique 200 pour permettre la recharge de la batterie 202 de ce véhicule par un réseau de distribution d'énergie électrique alimentant la borne 100. Le véhicule électrique 200 est couplé à la borne 100 par une ligne galvanique de recharge comprenant un câble 102 relié d'une part à un bloc d'alimentation de puissance de la borne 100 et d'autre part à un connecteur 104 enfiché dans un socle 204 du véhicule. Le socle 204 est relié par un câble interne 206 à un commutateur 208 assurant l'interconnexion avec un convertisseur AC/DC 210. Le convertisseur 210 convertit le courant alternatif triphasé délivré par la borne 100 via les câbles 102 et 206 en un courant continu de recharge de la batterie 202, sous le contrôle d'un système 212 de gestion de la batterie (BMS, *Battery Management System*)*.*

La Figure 2 illustre les principaux éléments intégrés à la borne 100 pour la délivrance du courant de recharge à la voiture électrique sur le câble 102.

La borne 100 comporte à cet effet un bloc d'alimentation secteur de puissance relié, côté entrée, au réseau de distribution d'énergie électrique via une liaison secteur triphasée 108 et, en sortie, au câble 102 relié au véhicule. Le câble 102 comporte trois conducteurs de puissance L1, L2, L3 et un conducteur de neutre N, pour la délivrance du courant alternatif triphasé au véhicule. Le câble 102 comporte également des conducteurs de communication bas niveau par les fils pilotes PP (*Plug Pilot*) et CP (*Control Pilot*)*,* référencés par rapport au neutre N. Les fils pilotes assurent une communication normalisée entre la borne véhicule, pour la vérification et la confirmation de la connexion de la prise depuis son verrouillage pendant la charge (fil PP) puis l'échange bidirectionnel des informations de gestion et de régulation de la charge (fil CP).

La borne comporte en outre un dispositif 110 d'identification du type de véhicule, propre à l'invention, mettant en œuvre notamment des moyens réflectométriques avec un étage générateur 112 permettant d'injecter des signaux de mesure dans les lignes L1, L2, L3, et un étage récepteur 114 permettant d'analyser sur ces mêmes lignes les signaux émis par l'étage générateur 112 après qu'ils ont été réfléchis. Le couplage des étages 112 et 114 avec les lignes L1, L2, L3 est réalisé de préférence par voie non galvanique, par des moyens inductifs tels que des boucles 116 bobinées autour de chacun des conducteurs L1, L2, L3. Les étages générateur 112 et récepteur 114 opèrent sous le contrôle d'une unité 118 recevant également en entrée les signaux CP et PP des fils pilotes.

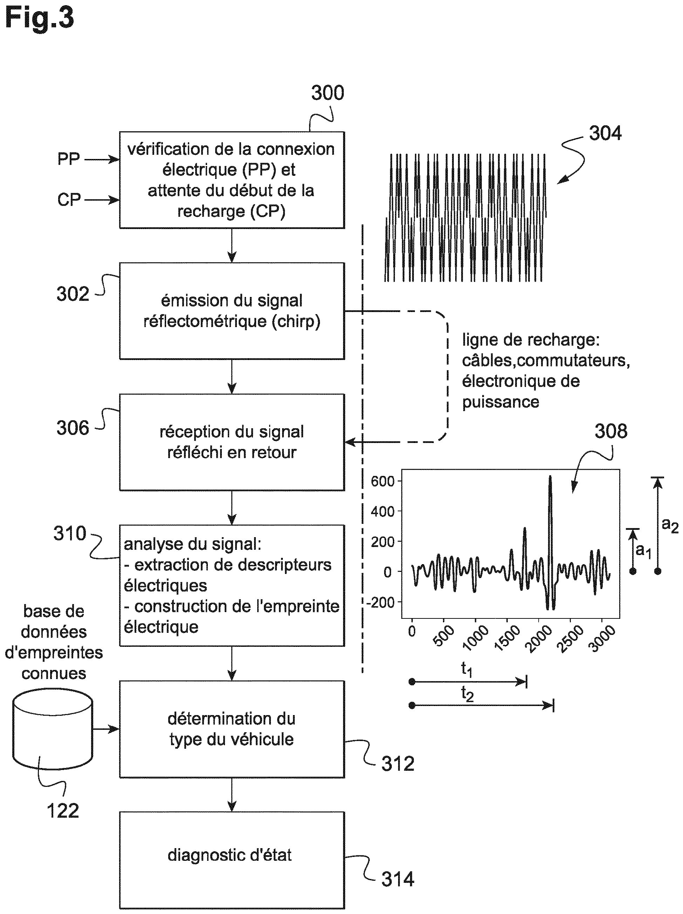

Les signaux captés par l'étage récepteur 114 sont transmis à un étage 120 de caractérisation et d'identification opérant selon un processus qui sera décrit plus bas en référence à la Figure 3. Cet étage d'identification 120 est couplé à une base de données 122 contenant un certain nombre d'empreintes prédéterminées de types de véhicules électriques connus, de manière à déterminer le type particulier correspondant au véhicule 200 présentement en configuration de recharge sur la borne 100. Cette information peut être transmise au bloc d'alimentation de puissance 106 pour éventuellement adapter les conditions de recharge de la batterie, et/ou à un étage 124 de communication avec l'extérieur, par exemple un étage modulateur à courants porteurs en ligne PLC (*Power Line Communication*) couplé en 126 aux lignes du réseau de distribution d'énergie, pour transmission à distance des informations déterminées par l'étage 120, notamment à des fins d'étude statistique, de sélection d'un tarif de recharge, d'ajustement de la puissance délivrée par la borne en fonction du type de véhicule, etc.

On va maintenant exposer en référence à la Figure 3 la manière dont est mise en œuvre l'invention pour déterminer le type particulier du véhicule électrique 200 au moment de son branchement sur la borne 100. Comme indiqué plus haut, l'invention met en œuvre des moyens réflectométriques, selon une technique en elle-même connue dans d'autres applications, notamment pour la détermination de l'état électrique de câbles ou de lignes, en vue de détecter et de localiser d'éventuels défauts électriques.

Essentiellement, dans une telle technique, un signal est envoyé sur la ligne à diagnostiquer, le long de laquelle il se propage ; lorsque le signal rencontre une discontinuité d'impédance de la ligne, une partie de l'énergie est renvoyée vers le point d'injection, et l'analyse du signal réfléchi permet de déduire diverses informations relatives à la ligne et aux composants électriques et électroniques montés sur celle-ci.

Dans le cas présent, l'invention met avantageusement en œuvre une technique de type réflectométrie temporelle TDR (*Time-Domain Reflectometry*)*,* en particulier une réflectométrie temporelle à spectre étalé SSTDR (*Spread-Spectrum Time-Domain Reflectometry*) telle que celle décrite dans l'article Kingston et al., A SSTDR Methodology, Implementations, and Challenges, Sensors 2021, 21(16), 5268.

La réflectométrie SSTDR est actuellement très utilisée notamment pour surveiller l‴état de santé" de nombreux systèmes électriques, comme expliqué dans l'article de Kingston. Son emploi n'est cependant aucunement limitatif de l'invention, qui peut être mise en œuvre avec d'autres techniques réflectométriques, notamment toutes les techniques basées sur l'analyse d'une onde progressive de type TWS (*Traveling-Wave Signal*)*.*

En revenant à la Figure 3, la première étape préalable consiste (bloc 300) à vérifier que le branchement de la fiche 104 sur le socle 200 est correct, établissement une connexion électrique conforme (comme indiqué par le fil pilote PP), puis à attendre le début effectif de la recharge (information communiquée par le fil pilote CP), correspondant à l'ouverture du commutateur 108. Il y a alors couplage du convertisseur 210 du véhicule électrique 200 à l'alimentation de puissance 106 de la borne 100.

L'étape suivante (bloc 302) consiste à injecter sur la ligne de recharge le signal réflectométrique par activation de l'étage générateur 102. Ce signal réflectométrique est, comme illustré en 304, un signal pseudopériodique de type *chirp* à modulation binaire et enveloppe d'amplitude constante. Ce signal 304 injecté dans la ligne de recharge va subir un certain nombre de réflexions et de modulations à chaque transition d'impédance rencontrée sur la ligne de recharge : commutateur, bifurcation, présence d'un circuit ou d'un composant susceptible de modifier les propriétés électriques de la ligne, etc.

Le signal réfléchi en retour est reçu (bloc 306) au niveau de l'étage 114 de recueil des signaux réfléchis captés sur la ligne de recharge 102 par les interfaces de couplage 116. Le signal reçu a par exemple l'aspect de celui illustré en 308, avec une succession de pics apparaissant à des instants t₁, t₂, ..., chaque pic ayant une amplitude respective a₁, a₂, ... différente.

L'analyse de ce signal (bloc 310), opérée par l'étage 120 de caractérisation, permet d'extraire un certain nombre de descripteurs électriques propres à la ligne de recharge, selon les techniques en elles-mêmes connues telles que celles décrite dans l'article de Kingston précité, ou encore dans l'article de Furse et al., Fault Diagnosis for Electrical Systems and Power Networks: A Review, IEEE Sensors Journal, 21(2), 888-906 (2020), articles auxquels on pourra se référer pour des explications détaillées sur cette technique.

Parmi les divers descripteurs électriques qu'il est possible d'extraire du signal réfléchi, on peut par exemple utiliser :
- les longueurs de ligne comprises entre chaque point présentant une rupture d'impédance: ces longueurs sont, typiquement, proportionnelles à la position temporelle des pics (t₁, t₂, ...) du signal recueilli, avec par exemple un pic correspondant à chaque commutateur intercalé dans la ligne de recharge entre la borne et la batterie, et/ou à chaque bifurcation d'un ou plusieurs conducteurs de la ligne de recharge ;
- la composante résistive de la variation d'impédance, qui influe notamment sur l'amplitude (a₁, a₂, ...) de chaque pic du signal réfléchi ; et/ou
- la composante capacitive de l'impédance, qui a un effet sur le positionnement fréquentiel et temporel de chaque pic.

De façon caractéristique de l'invention, à partir de cette pluralité de descripteurs électriques ainsi extraits, le dispositif construit une "empreinte électrique" unique, caractéristique du véhicule, par exemple sous forme d'un vecteur des caractéristiques électriques qui ont été déterminées.

L'étape suivante (bloc 312), également caractéristique de l'invention, consiste à confronter l'empreinte électrique qui a été ainsi construite à une pluralité d'empreintes prédéterminées de types de véhicules électriques connus, stockées dans la base de données 122.

Cette étape peut être mise en œuvre par différentes techniques permettant de corréler une empreinte particulière à un ensemble d'empreintes prédéterminées, par exemple par utilisation d'un réseau neuronal préalablement entraîné avec les empreintes prédéterminées, ou tout autre technique de classification supervisée en elle-même connue. Le résultat de cette étape est la détermination du type particulier du véhicule en cours de recharge, le "type" étant entendu au sens indiqué plus haut, à savoir la marque et le modèle du véhicule électrique, et également, pour un même modèle, la version de ce modèle au cas où celle-ci présenterait des caractéristiques électriques de batterie et/ou de mode de recharge significativement différentes de celles des autres versions.

Facultativement, il peut être effectué ensuite (bloc 314) un diagnostic de l'état du système électrique du véhicule de manière à déterminer un "état de santé" de ce dernier en fonction i) des descripteurs électriques extraits à l'étape 310 et ii) du type particulier du véhicule en cours de recharge, déterminé à l'étape 312.

Les techniques de diagnostic d'état de santé électrique sont en elles-mêmes bien connues, par exemple d'après les articles de Kingston et Furse précités, mais la mise en œuvre de l'invention permet de les accélérer et de les rendre plus spécifiques grâce à la connaissance du type particulier de véhicule en cours de recharge.

En particulier, connaissant le type du véhicule, il est possible de rechercher dans des bases de données du constructeur, pour chaque descripteur électrique, des plages de tolérance acceptables afin de vérifier si tous les paramètres correspondent ou non aux spécifications de ce constructeur, afin de pouvoir détecter ou anticiper des défauts de fonctionnement. On peut ainsi réaliser un contrôle technique électrique du véhicule parallèlement à l'opération de recharge et à chaque recharge, sans qu'il soit besoin pour l'utilisateur de se rendre à un garage pour contrôler le bon état de son véhicule.

Par ailleurs, pour enrichir la base de données 122, il peut être avantageux de transmettre à celle-ci, pour les y enregistrer, des informations produites par les moyens réflectométriques 112 à 118 et/ou par les moyens d'identification 120, et/ou des informations dérivées des informations produites.

Dans ce cas, le dispositif peut notamment comprendre un afficheur qui présente à l'utilisateur le type de véhicule électrique tel que déterminé par les moyens d'identification 120, et lui demande de confirmer ou d'infirmer le type de véhicule estimé par le dispositif intégré à la borne sur laquelle il branche son véhicule pour le recharger. Cette information de confirmation ou d'infirmation, par l'utilisateur est transmise à la base de données 122, qui pourra ainsi être enrichie en ce qui concerne notamment le degré de confiance qui peut être accordé au processus d'évaluation automatique du type de véhicule, et ce pour chaque type de véhicule connu de la base de données.

Diverses variantes peuvent être apportées à la mise en oeuvre de l'invention que l'on a décrite, par exemple :
- l'utilisation d'une technique réflectométrique autre que SSTDR (celle-ci étant toutefois une technique préférentielle, car bien documentée et particulièrement adaptée à la mise en œuvre des enseignements de l'invention) ;
- la recharge peut être opérée en alternatif monophasé ou triphasé, ou en courant continu ;
- le début de l'analyse peut commencer avant même le début de la recharge, c'est-à-dire avant la fermeture du commutateur 208 d'interfaçage avec les circuits internes au véhicule. En d'autres termes, le processus d'identification de l'invention peut être engagé dès réception du signal pilote PP de vérification de la connexion électrique et avant réception du signal pilote CP signalant le début de la recharge ;
- la base de données 122 d'empreintes électriques connues peut être localisée dans la borne, comme décrit sur la Figure 2, ou bien être située à distance, voire même de façon centralisée et dématérialisée (technologie *cloud*) *;*
- le circuit 110 de caractérisation d'identification du type de véhicule peut être situé à l'intérieur de la borne ou à l'extérieur de celle-ci ;
- dans ce dernier cas, en particulier pour une station de recharge à plusieurs bornes, on peut prévoir d'utiliser un seul circuit de caractérisation 110 commun à toutes les bornes, avec un système de multiplexage permettant de se connecter à chacune de celles-ci. Le circuit de caractérisation selon l'invention peut notamment être situé dans l'armoire commune de raccordement au réseau de distribution d'énergie électrique de l'ensemble des bornes du parking.

## Revendications

1. Un dispositif (110) d'identification d'un type de véhicule électrique à batterie rechargeable sur secteur, **caractérisé en ce qu'**il comprend :
- une interface (116) de couplage du dispositif (110) à une ligne de recharge (102, 104, 204, 206, 208) de véhicule électrique, la ligne de recharge couplant un bloc d'alimentation secteur de puissance (106) à une batterie (202) d'un véhicule (200) en configuration de recharge ;
- des moyens réflectométriques (112-118), aptes à :
. injecter des signaux de mesure (304) dans la ligne de recharge via l'interface de couplage,
. capter, via l'interface de couplage, des signaux réfléchis (308) produits en retour dans la ligne de recharge, et
. analyser le profil temporel et/ou fréquentiel des signaux réfléchis pour obtenir des descripteurs électriques propres à la ligne de recharge ;
- des moyens de caractérisation (120), aptes à produire une empreinte électrique représentative du véhicule (200) à partir des descripteurs électriques obtenus ; et
- des moyens d'identification (120), aptes à déterminer un type correspondant au véhicule (200) en configuration de recharge, sur la base de l'empreinte électrique produite par les moyens de caractérisation et d'une pluralité d'empreintes prédéterminées de types de véhicules électriques connus.

2. Le dispositif d'identification de la revendication 1, dans lequel les moyens d'identification (120) comprennent des moyens corrélateurs, aptes à corréler l'empreinte électrique produite par les moyens de caractérisation avec des empreintes prédéterminées de types de véhicules électriques connus mémorisées dans une base de données (122).

3. Le dispositif d'identification de la revendication 2, comprenant en outre des moyens pour transmettre à la base de données (122), pour enregistrement dans la base de données (122), . des informations produites en sortie des moyens réflectométriques (112-118) et/ou des moyens d'identification (120).

4. Le dispositif d'identification de la revendication 3, comprenant en outre des moyens de confirmation, aptes à : présenter à un utilisateur le type de véhicule électrique déterminé par les moyens d'identification (120) ; recevoir en entrée une information de confirmation ou d'infirmation ; et transmettre cette information de confirmation ou d'infirmation à la base de données (122) pour enregistrement dans la base de données (122).

5. Le dispositif d'identification de la revendication 2, dans lequel la base de données d'empreintes prédéterminées de types de véhicules électriques connus est une base de données (122) incluse dans le dispositif d'identification (110).

6. Le dispositif d'identification de la revendication 2, dans lequel la base de données d'empreintes prédéterminées de types de véhicules électriques connus est une base de données distante, externe au dispositif d'identification (110), et dans lequel le dispositif d'identification (110) comprend des moyens de communication aptes à permettre un accès à la base de données distante.

7. Le dispositif d'identification de la revendication 1, dans lequel les moyens d'identification (120) comprennent un réseau neuronal recevant en entrée l'empreinte électrique produite par les moyens de caractérisation, le réseau neuronal ayant été préalablement entrainé avec des empreintes prédéterminées de types de véhicules électriques connus.

8. Une borne de recharge (100) de véhicule électrique, extérieure au véhicule (200), **caractérisée en ce qu'**elle incorpore un dispositif d'identification (110) selon l'une des revendications 1 à 7.

9. Une station de recharge comprenant une pluralité de bornes de recharge individuelles, chacune des bornes de recharge individuelles (100) étant apte à être couplée à un véhicule électrique (200) respectif, **caractérisée en ce qu'**elle comprend :
- un dispositif d'identification (110) selon l'une des revendications 1 à 7, commun à l'ensemble des bornes de recharge ; et
- des moyens contrôlés de couplage temporaire du dispositif d'identification (110) à chacune des bornes de recharge.

10. Un procédé d'identification d'un type de véhicule électrique à batterie rechargeable sur secteur, **caractérisé en ce qu'**il comprend des étapes de :
a) couplage à une ligne de recharge (102, 104, 204, 206, 208) de véhicule électrique, la ligne de recharge couplant un bloc d'alimentation secteur de puissance (106) à une batterie (202) d'un véhicule électrique (200) en configuration de recharge ;
b) injection (302) de signaux de mesure dans la ligne de recharge ;
c) recueil (306) de signaux réfléchis (308) produits en retour dans la ligne de recharge ;
d) analyse (310) du profil temporel et/ou fréquentiel des signaux réfléchis pour obtenir des descripteurs électriques propres à la ligne de recharge ;
e) caractérisation (310) d'une empreinte électrique représentative du véhicule (200) à partir des descripteurs électriques obtenus ; et
f) détermination (312), sur la base de l'empreinte électrique produite à l'étape de caractérisation et d'une pluralité d'empreintes prédéterminées de types de véhicules électriques connus, d'un type correspondant au véhicule en configuration de recharge.

11. Le procédé d'identification de la revendication 10, dans lequel l'étape f) (312) comprend la corrélation de l'empreinte électrique produite à l'étape de caractérisation avec des empreintes prédéterminées de types de véhicules électriques connus mémorisées dans une base de données.

12. Le procédé d'identification de la revendication 10, dans lequel l'étape f) (312) comprend l'application de de l'empreinte électrique produite à l'étape de caractérisation (310) à un réseau neuronal préalablement entrainé avec des empreintes prédéterminées de types de véhicules électriques connus.

13. Le procédé d'identification de la revendication 10, dans lequel l'exécution des étapes b) à f) (302-312) est conditionnée (300) à la réception préalable d'un signal de confirmation i) du couplage effectif (PP) du véhicule électrique (200) à la ligne de recharge et ii) du passage d'un courant de recharge (CP) du bloc d'alimentation secteur de puissance (106) à la batterie (202) du véhicule (200).

14. Le procédé d'identification de la revendication 10, comprenant en outre, après l'étape f) (312) de détermination du type correspondant au véhicule (200) en configuration de recharge, une étape de :
g) diagnostic (314) d'état du système électrique du véhicule, le diagnostic d'état étant au moins en partie fonction du type de véhicule déterminé à l'étape f).
